# EUROPEAN PATENT SPECIFICATION

(11) **EP 2 978 941 B1**
(45) Date of publication and mention of the grant of the patent: **22.08.2018**
(21) Application number: 14776042.5
(22) Date of filing: 19.03.2014
(51) Int. Cl.: F01D 25/12, F02C 7/18, F23R 3/00

(54) **TURBINE ENGINE AND TURBINE ENGINE COMPONENT WITH IMPROVED COOLING PEDESTALS**
TURBINENMOTOR UND TURBINENMOTORKOMPONENTE MIT SOCKELN FÜR VERBESSERTE KÜHLUNG
MOTEUR À TURBINE ET COMPOSANT DE MOTEUR À TURBINE AYANT DES PIEDS DE REFROIDISSEMENT PERFECTIONNÉS

(30) Priority: 26.03.2013 US 201361805171 P
(43) Date of publication of application: 03.02.2016
(73) Proprietor: United Technologies Corporation, Farmington, CT 06032 (US)
(72) Inventor: SOUCY, Ronald R., Tolland, Connecticut 06084 (US); DELISLE, Robert P., Colchester, Connecticut 06415 (US)
(74) Representative: Dehns
(86) International application number: PCT/US2014/031168
(87) International publication number: WO 2014/160565

(56) References cited:
- EP-A2- 2 554 903
- JP-A- H08 110 012
- JP-A- 2000 320 837
- US-A1- 2003 145 604
- US-A1- 2009 100 838
- US-A1- 2011 108 257
- US-A1- 2011 108 257
- US-B1- 6 589 600
- US-B1- 6 681 578

## Description

### BACKGROUND

The present invention relates to turbine engines. In particular, the invention relates to cooling pedestals for a turbine engine.

A turbine engine ignites compressed air and fuel in a combustion chamber, or combustor, to create a flow of hot combustion gases to drive multiple stages of turbine blades. The turbine blades extract energy from the flow of hot combustion gases to drive a rotor to perform useful work, for example, driving a fan to provide thrust or a generator rotor to provide electrical power. The turbine blades also drive a compressor to provide the compressed air.

A flow of cooling air is typically provided by the compressed air produced upstream of the combustor. Some of the energy extracted from the flow of combustion gases must be used to provide the compressed air, thus reducing the energy available to do useful work and reducing an overall efficiency of the turbine engine. Improvements in the efficient use of compressed air for cooling engine components can improve the overall efficiency of the turbine engine.

Some turbine engine components are directly exposed to the flow of combustion gases and must survive in a high-temperature environment. Often, surfaces of the engine components exposed to high temperatures are cooled by the flow of cooling air to remove heat and prolong the useful life of the component. The efficiency by which heat is exchanged between a component surface to be cooled and the flow of cooling air is often enhanced by the use of cooling pedestals (also known as pin fins). The cooling pedestals project away from the surface to be cooled and into the flow of cooling air. The pedestals increase the heat transfer area as well as the speed of the flow of cooling air, thereby increasing heat transfer efficiency. As heat transfer efficiency improves, less cooling air is necessary to adequately cool the component improving the overall efficiency of the turbine engine.

While the use of cooling pedestals improves heat transfer efficiency between turbine engine components exposed to the flow of combustion gases and the flow of cooling air, further improvement in the heat transfer efficiency of cooling pedestals can improve overall turbine engine efficiency.

US 2011/108257 discloses a heat exchange bulkhead that includes a base plate and a plurality of pin-fins provided upright on the surface of the base plate. A cooling medium flows in the length direction of the base plate along the surface of the base plate, and each of the pin-fins is entirely or partially inclined backward to the downstream side such that the top face thereof is located at the downstream side of the bottom face. Said document discloses the preamble of claim 1.

### SUMMARY

The present invention provides a turbine engine component as defined in claim 1.

The present invention further provides a gas turbine engine as defined in claim 10.

### BRIEF DESCRIPTION OF THE DRAWINGS

FIG. 1 is a sectional view of gas turbine engine including a turbine engine component with cooling pedestals.
FIG. 2 is an enlarged sectional view of the combustor of the gas turbine engine shown in FIG. 1 including cooling pedestals.
FIGS. 3A-3B are enlarged and further enlarged sectional views of a combustor heat shield.
FIG. 4 is an enlarged sectional view of another combustor heat shield.
FIG. 5 is an enlarged sectional view of yet another combustor heat shield, which does not form part of the invention.
FIG. 6 is a diagram of a direct digital manufacturing process.

### DETAILED DESCRIPTION

A turbine engine component includes pedestals projecting from a surface to be cooled by a flow of cooling air. At least some of the pedestals include a pedestal surface oriented such that a ray normal to the pedestal surface and directed away from the pedestal surface intersects a plane defined by an intersection between the surface to be cooled and the pedestal. The component may be formed by a direct digital manufacturing process.

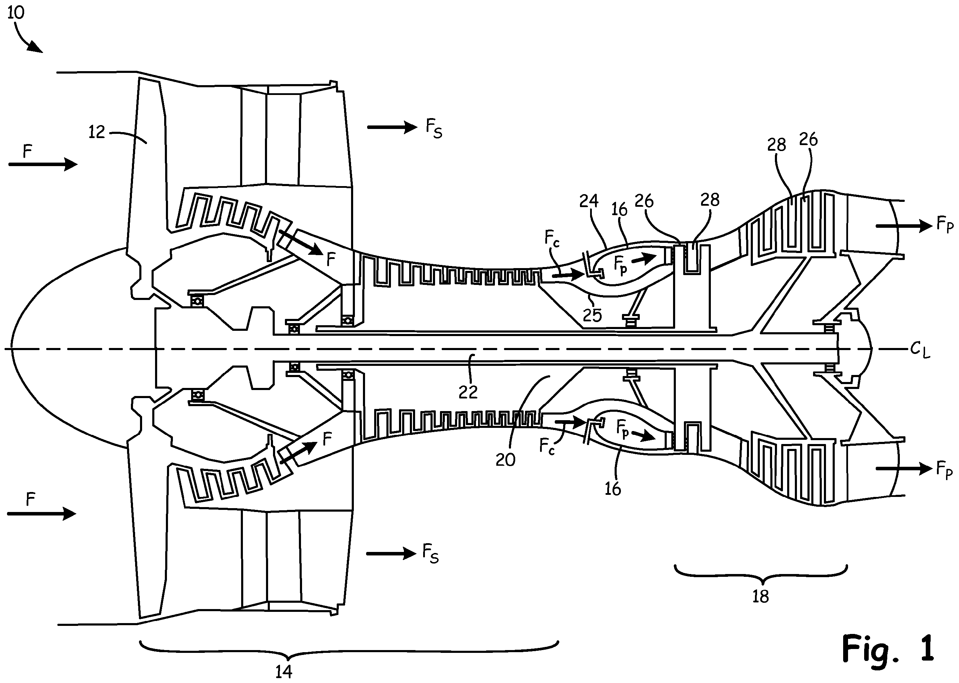

FIG. 1 is a representative illustration of a gas turbine engine including a turbine engine component embodying the present invention. The view in FIG. 1 is a longitudinal sectional view along an engine center line. FIG. 1 shows gas turbine engine 10 including fan 12, compressor 14, combustor 16, turbine 18, high-pressure rotor 20, low-pressure rotor 22, outer casing 24, and inner casing 25. Turbine 18 includes rotor stages 26 and stator stages 28.

As illustrated in FIG. 1, fan 12 is positioned along engine center line C_{L} at one end of gas turbine engine 10. Compressor 14 is adjacent fan 12 along engine center line C_{L}, followed by combustor 16. Combustor 16 is an annular structure that extends circumferentially around engine center line C_{L}. Turbine 18 is located adjacent combustor 16, opposite compressor 14. High-pressure rotor 20 and low-pressure rotor 22 are mounted for rotation about engine center line C_{L}. High-pressure rotor 20 connects a high-pressure section of turbine 18 to compressor 14. Low-pressure rotor 22 connects a low-pressure section of turbine 18 to fan 12. Rotor blades 26 and stator vanes 28 are arranged throughout turbine 18 in alternating rows. Rotor blades 26 connect to high-pressure rotor 20 and low-pressure rotor 22. Outer casing 24 surrounds turbine engine 10 providing structural support for compressor 14, and turbine 18, as well as containment for a flow of cooling air Fc. Inner casing 25 is generally radially inward from combustor 16 providing structural support for combustor 16 as well as containment for the flow of cooling air Fc.

In operation, air flow F enters compressor 14 through fan 12. Air flow F is compressed by the rotation of compressor 14 driven by high-pressure rotor 20 producing a flow of cooling air Fc. Cooling air Fc flows between combustor 16 and each of outer case 24 and inner case 25. A portion of cooling air Fc enters combustor 16, with the remaining portion of cooling air Fc employed farther downstream for cooling other components exposed to high-temperature combustion gases, such as rotor blades 26 and stator vanes 28. Compressed air and fuel are mixed and ignited in combustor 16 to produce high-temperature, high-pressure combustion gases Fp. Combustion gases Fp exit combustor 16 into turbine section 18. Stator vanes 28 properly align the flow of combustion gases Fp for an efficient attack angle on subsequent rotor blades 26. The flow of combustion gases Fp past rotor blades 26 drives rotation of both high-pressure rotor 20 and low-pressure rotor 22. High-pressure rotor 20 drives a high-pressure portion of compressor 14, as noted above, and low-pressure rotor 22 drives fan 12 to produce thrust Fs from gas turbine engine 10. Although embodiments of the present invention are illustrated for a turbofan gas turbine engine for aviation use, it is understood that the present invention applies to other aviation gas turbine engines and to industrial gas turbine engines as well.

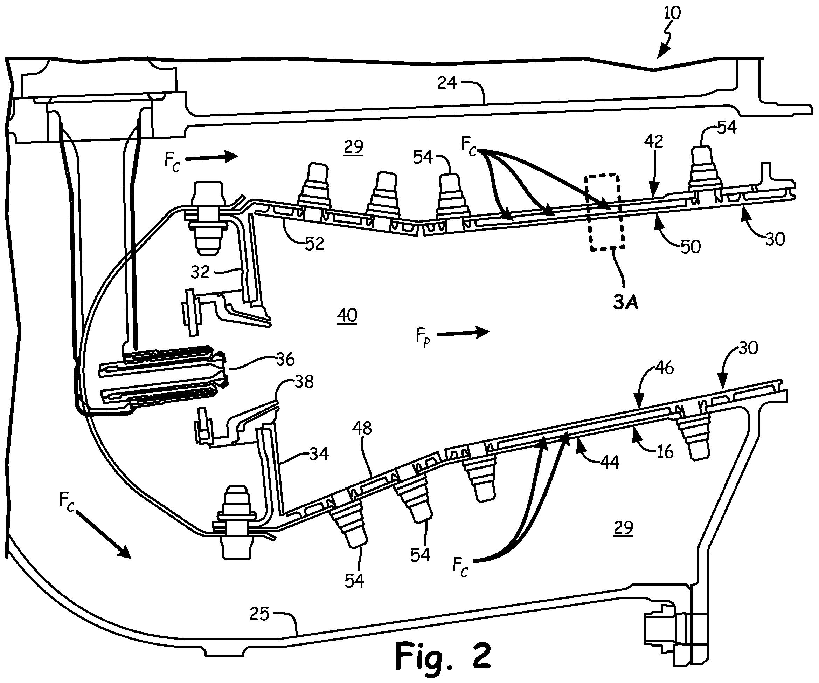

FIG. 2 is an enlarged view illustrating details of combustor 16 of gas turbine engine 10 shown in FIG. 1. FIG. 2 illustrates combustor 16, outer case 24, and inner case 25. Outer case 24 and inner case 25 are radially outward and inward, respectively, from combustor 16, thus creating annular plenum 29 around combustor 16. Combustor 16 is an annular structure that extends circumferentially around engine center line C_{L}. Combustor 16 includes combustor liner 30, bulkhead 32, bulkhead heat shield 34, fuel nozzle 36, swirler 38, and combustion chamber 40. Combustor liner 30 includes outer shell 42, inner shell, 44, aft inside diameter (ID) heat shield 46, forward ID heat shield 48, aft outside diameter (OD) heat shield 50, forward OD heat shield 52, and studs 54. Combustor 16 is an annular structure that extends circumferentially around engine center line C_{L}, thus combustor liner 30 is arcuate in shape, with an axis coincident with engine center line C_{L}.

Combustion chamber 40 within combustor 16 is bordered radially by combustor liner 30, and by bulkhead 32 on the upstream axial end, with a combustion gas opening on the downstream axial end. Swirler 38 connects fuel nozzle 36 to bulkhead 32 through an opening in bulkhead 32. Bulkhead 32 is protected from the hot flow of combustion gases Fp generated within combustion chamber 40 by bulkhead heat shield 34. Aft ID heat shield 46 and forward ID heat shield 48 are attached to inner shell 44 to make up the inside diameter portion of combustor liner 30. Similarly, aft OD heat shield 50 and forward OD heat shield 52 are attached to outer shell 42 to make up the outside diameter portion of combustor liner 30. Heat shields 46, 48, 50, 52 are attached to their respective shell 42, 44 by studs 52 projecting from heat shields 46, 48, 50, 52. Heat shields 46, 48, 50, 52 are made of a high-temperature metal alloy.

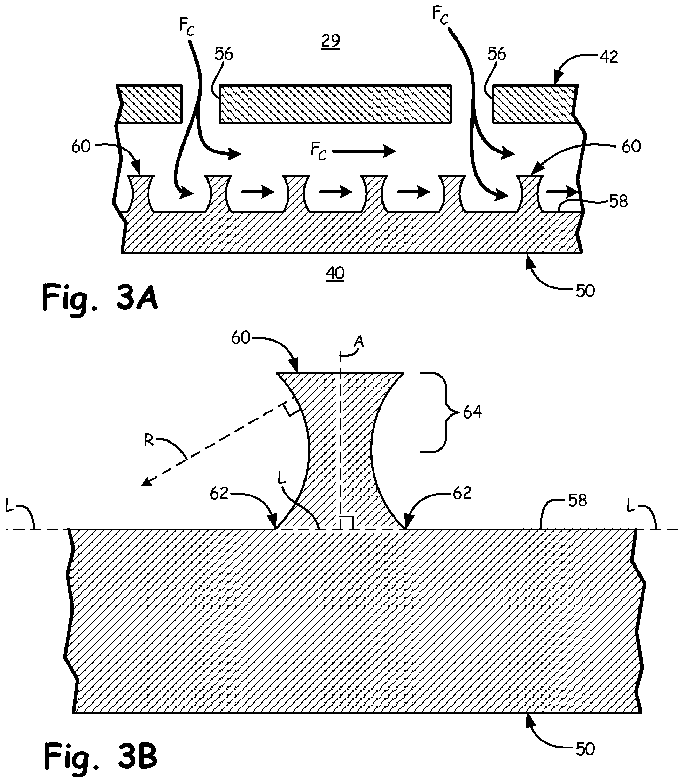

In operation, fuel from fuel nozzle 36 mixes with air in swirler 38 and is ignited in combustion chamber 40 to produce the flow of combustion gases Fp for use by turbine 18 as described above in reference to FIG. 1. As the flow of combustion gases Fp passes through combustion chamber 40, combustor liner 30 is cooled by a flow of cooling air Fc flowing from plenum 29 through combustor liner 30. The flow of cooling air Fc flows through outer shell 42 and across heat shields 50, 52 to cool heat shields 50, 52, as shown in greater detail below in reference to FIGS. 3A, 4A, and 5A. Similarly, the flow of cooling air Fc flows through inner shell 44 and across heat shields 46, 48 to cool heat shields 46, 48.

FIG. 3A is an enlarged cross-sectional view of a combustor heat shield embodying the present invention. FIG. 3A shows a portion of combustor liner 30 of FIG. 2 including a portion of outer shell 42 and heat shield 50. As shown in FIG. 3A, outer shell 42 includes cooling holes 56. Heat shield 50 includes surface to be cooled 58 and a plurality of cooling pedestals 60. Cooling holes 56 are openings in outer shell 42 to permit the flow of cooling air Fc to flow from plenum 29, through outer shell 42, and across surface to be cooled 58. Cooling pedestals 60 are typically arranged in a two-dimensional array, with a single dimension shown in the cross-sectional view of FIG. 3A. As shown in FIG. 3A and detailed further in FIG. 3B, cooling pedestals 60 project from surface to be cooled 58 and are shaped such that a portion of the surface of each cooling pedestal 60 faces surface to be cooled 58.

FIG. 3B is a further enlarged cross-sectional view of heat shield 50 of FIG. 3A. FIG. 3B shows a single cooling pedestal 60 projecting from surface to be cooled 58. Cooling pedestal 60 includes intersections 62 and pedestal surface 64. In cross-section, intersections 62 are two points where cooling pedestal 60 intersects surface to be cooled 58. Pedestal surface 64 is a portion of a surface of pedestal 60 oriented such that ray R normal to pedestal surface 64 and directed away from pedestal surface 64 intersects line L defined by intersections 62. Ray R is understood throughout to be used in a geometric sense, as a portion of line that starts at an endpoint and extends to infinity. In the embodiment of FIG. 3B, cooling pedestal 60 has a curved hourglass shape such that throughout pedestal surface 64, any ray R normal to pedestal surface 64 will intersect line L. Rays normal to and directed out from any other portion of the surface of pedestal 60 will not intersect line L. A feature of cooling pedestal 60 created by pedestal surface 64 may be referred to as a reentrant profile. Because of the reentrant profile, cooling pedestals 60 have a larger heat transfer area when compared with cooling pedestals that do not include the reentrant profile. In addition, a flow profile of cooling air Fc across surface to be cooled 58 may be managed more efficiently for improved overall heat transfer because cooling pedestals 60 are able to produce increasing flow velocities away from surface to be cooled 58. As heat transfer efficiency improves, less cooling air is necessary to adequately cool heat shield 50, thus improving the overall efficiency of turbine engine 10.

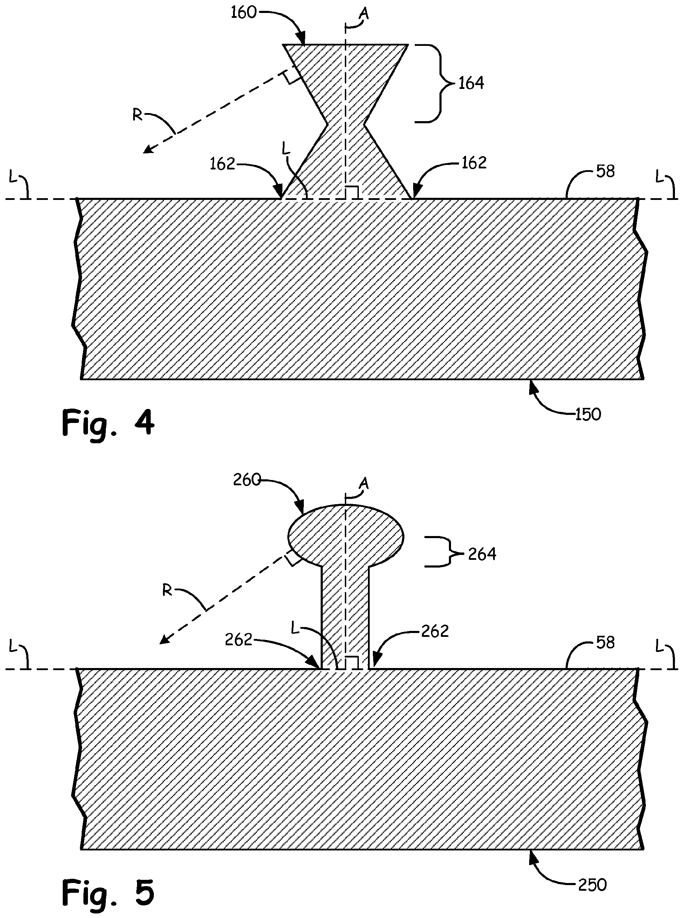

The curved hourglass shape of cooling pedestals 60 illustrated in FIGS .3A and 3B is merely exemplary. FIG. 4 is an enlarged sectional view of another combustor heat shield embodying the present invention. FIG. 4 illustrates heat shield 150 including cooling pedestals 160 having an angular hourglass shape. Heat shield 150 is identical to heat shield 50 in form and function as described above in reference to FIGS. 3A and 3B, except that cooling pedestals 60 are replaced by cooling pedestals 160. As shown FIG. 4, cooling pedestal 160 projects from surface to be cooled 58. Cooling pedestal 160 includes intersections 162 and pedestal surface 164. In cross-section, intersections 162 are two points where cooling pedestal 160 intersects surface to be cooled 58. Pedestal surface 164 is a portion of a surface of pedestal 160 oriented such that ray R normal to pedestal surface 164 and directed away from pedestal surface 164 intersects line L defined by intersections 162. In the embodiment of FIG. 4, cooling pedestal 160 has an angular hourglass shape such that throughout pedestal surface 164, any ray R normal to pedestal surface 164 will intersect line L. Rays normal to and directed out from any other portion of the surface of pedestal 160 will not intersect line L. As with the embodiment described above in reference to FIG. 3, pedestal surface 164 creates a reentrant profile for cooling pedestal 160, resulting in the previously noted heat transfer efficiency improvements.

Another exemplary pedestal shape is illustrated in FIG. 5. FIG. 5 is an enlarged sectional view of yet another combustor heat shield example, which does not form part of the invention. FIG. 5 illustrates heat shield 250 including cooling pedestals 260 having a mushroom shape. Heat shield 250 is identical to heat shield 50 in form and function as described above in reference to FIGS. 3A and 3B, except that cooling pedestals 60 are replaced by cooling pedestals 260. As shown FIG. 5, cooling pedestal 260 projects from surface to be cooled 58. Cooling pedestal 260 includes intersections 262 and pedestal surface 264. In cross-section, intersections 262 are two points where cooling pedestal 260 intersects surface to be cooled 58. Pedestal surface 264 is a portion of a surface of pedestal 260 oriented such that ray R normal to pedestal surface 264 and directed away from pedestal surface 264 intersects line L defined by intersections 262. In the embodiment of FIG. 5, cooling pedestal 260 has a mushroom shape such that throughout pedestal surface 264, any ray R normal to pedestal surface 264 will intersect line L. Rays normal to and directed out from any other portion of the surface of pedestal 260 will not intersect line L. As with the embodiment described above in reference to FIG. 3, pedestal surface 264 creates a reentrant profile for cooling pedestal 260, resulting in the previously noted heat transfer efficiency improvements.

In some embodiments, cooling pedestal 60, cooling pedestal 160, or cooling pedestals 260 may be symmetrical about pedestal axis A. Pedestal axis A is perpendicular to surface to be cooled 58. Cross-sections of cooling pedestals 60, 160, 260 perpendicular to pedestal axis A may be one of an ellipsis, for example, a circle; and a parallelogram, for example, a diamond.

In the embodiments illustrated above, all cooling pedestals are of the same shape. However, it is understood that the present invention encompasses embodiments where cooling pedestal arrays include cooling pedestals of mixed shapes. For example, a heat shield embodying the present invention may include a pedestal array including a mix of cooling pedestals 60, cooling pedestals 160, and cooling pedestals 260, as described above, in addition to cooling pedestals not including a reentrant profile.

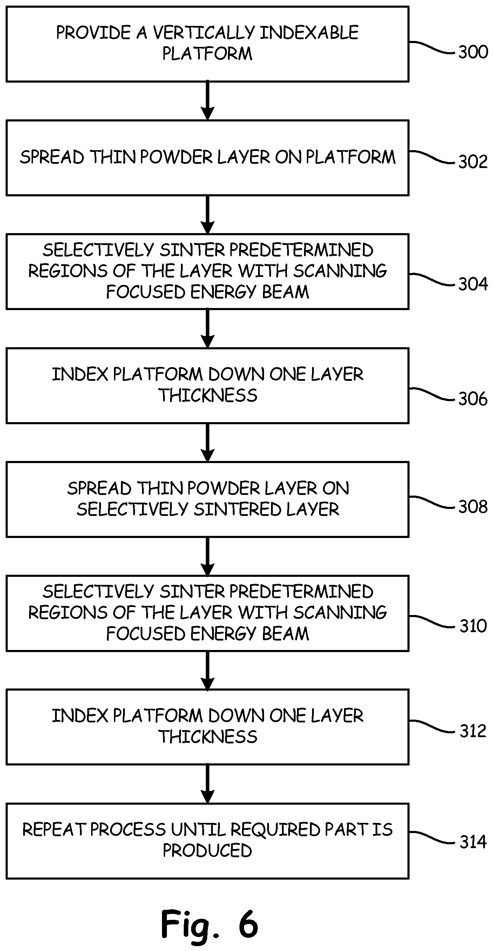

Turbine engine components embodying the present invention may be formed by a rapid, economical, and reproducible direct digital manufacturing process. This replaces investment casting processes typically employed to form turbine engine components such as combustor heat shields. The unique reentrant pedestal shapes of the present invention may be either commercially impractical or impracticable to form by investment casting. The reentrant slope and blind hole necessary to form such pedestals combine to make moving material into and out of the molds very difficult. In contrast, direct digital manufacturing processes do not require a mold. One embodiment of the process is outlined in FIG. 6. Using direct digital manufacturing, a part is manufactured layer by layer on a platform (Step 300) in a chamber with a controlled environment, preferably an inert atmosphere or vacuum. First, a thin layer of a powder of the material that will form the desired part (e.g. combustor heat shield) is spread on the platform (Step 302). One or more focused energy beams are then scanned across the platform to manufacture pre-selected areas of the powder (Step 304). The manufactured areas on the platform represent a single cross sectional slice of the desired part. The energy beams are directed according to a CAD model of the part inserted in the memory of computerized scanning hardware. Following the first scan, the platform is indexed downwardly by one layer thickness (Step 306) and another powder layer is spread on the manufactured layer (Step 308). This layer is then scanned by the energy beam(s) to selectively manufacture pre selected areas of the second layer of the part (Step 310) after which the platform is indexed downwardly again (Step 312). The process is repeated layer-by-layer until the clamping insert is produced (Step 314). The dimensional accuracy of clamping inserts produced by this type of direct digital manufacturing scales as the beam diameter, servo-control accuracy of the scan and the powder size. Surface roughness is a function of particle size. Smaller particles produce smoother surfaces. Overall, dimensional tolerances of better than ± 0.5 mils (0.0127 mm) are known in the art.

Direct digital manufacturing of the present invention may be by, but not restricted to, selective laser sintering, electron beam sintering, and direct metal laser sintering. Selected laser sintering is taught in U.S. Patent No. 4,863,538 to Deckard. Electron beam sintering is taught in U.S. Patent No. 7,454,262 to Larsson. Direct metal laser sintering is taught in U.S. Patent No. 6,042,774 to Wilkening et al. The Deckard and Wilkening et al. processes use scanning lasers as energy sources. One form of direct digital manufacturing for the present invention is direct metal laser sintering. Discussion of Possible Embodiments

Although the present invention has been described with reference to preferred embodiments, workers skilled in the art will recognize that changes may be made in form and detail.

## Claims

1. A turbine engine component (50) comprising:
a surface (58) to be cooled by a flow of cooling air; and
a plurality of pedestals (60,160) projecting from the surface (58) to be cooled, **characterized in that**:
at least one of the pedestals (60,160) including a pedestal surface (60) which has a curved hourglass shape such that throughout a portion (64) of said surface (60) any ray (R) normal on said portion (64) and directed away from the pedestal surface intersects a line defined by an intersection between the surface (58) to be cooled and the pedestal (60), wherein the turbine engine component (50) is a combustor heat shield.

2. The component of claim 1, wherein the plurality of pedestals (60, 160) and the surface (58) to be cooled are formed as a single piece.

3. The component of claim 2, wherein the plurality of pedestals (60, 160) and the surface (58) to be cooled are formed of a high-temperature metal.

4. The component of claim 1, 2 or 3, wherein the plurality of pedestals (6, 160) and the surface (58) to be cooled are formed by direct digital manufacturing technology from metal alloy powder.

5. The component of claim 4, wherein the direct digital manufacturing technology includes at least one of direct metal laser sintering, electron beam sintering, and selected laser sintering.

6. The component of claim 5, wherein the direct digital manufacturing technology includes direct metal laser sintering.

7. The component of any preceding claim, wherein the pedestal (60, 160) is symmetrical about a pedestal axis (A) perpendicular the surface (58) to be cooled.

8. The component of claim 7, wherein sections of the pedestal (60, 160) perpendicular to the pedestal axis are one of ellipses and parallelograms.

9. The component of any preceding claim, wherein each pedestal (60, 160) of the plurality of pedestals projecting from the surface (58) to be cooled includes a pedestal surface (64) oriented such that a ray normal to the pedestal surface (58) and directed away from the pedestal surface (64) intersects a line defined by an intersection between the surface (58) to be cooled and the pedestal (60, 160).

10. A gas turbine engine (10) comprising:
a compressor section (14) providing a flow of cooling air;
a turbine section (18); and
a combustor section (16) arranged between the compressor section (14) and the turbine section (18), the combustor section (16) including:
a plenum (29) in fluid communication with the compressor section (14) to receive the flow of cooling air;
a combustion chamber (40) in fluid communication with the turbine section; and
at least one combustor heat shield (50) between the combustion chamber (40) and the plenum (29), the combustor heat shield (50) being a component of any preceding claim,
the surface to be cooled by the flow of cooling air facing away from the combustion chamber (40).

11. The engine of claim 10, wherein the combustor heat shield (50) is formed as a single piece.

12. The engine of claim 11, wherein the combustor heat shield (50) is formed of a high-temperature metal.

13. The engine of claim 10, 11 or 12, wherein the combustor heat shield (50) is formed by direct digital manufacturing technology from metal alloy powder, the direct digital manufacturing technology including at least one of direct metal laser sintering, electron beam sintering, and selected laser sintering.

14. The engine of any of claims 10 to 13, wherein the combustor section (16) further includes a plurality of combustor heat shields (50), each of the plurality of combustor heat shields (50) having an inner surface facing the combustion chamber (40) and an outer surface facing away from the combustion chamber, and the surface (58) to be cooled by the flow of cooling air is the outer surface.

## Patentansprüche

1. Turbinenmotorkomponente (50), umfassend:
eine Fläche (58), die durch eine Strömung von Kühlluft gekühlt werden soll; und
eine Vielzahl von Sockeln (60,160), die von der Fläche (58) hervorstehen, die gekühlt werden soll, **dadurch gekennzeichnet, dass**:
mindestens einer der Sockel (60,160) eine Sockelfläche (60) hat, die eine gebogene Sanduhrform hat, sodass über einen Abschnitt (64) der Fläche (60) jeder Strahl (R) senkrecht zu dem (64) und weg von der Sockelfläche ausgerichtet eine Linie schneidet, die durch einen Schnittpunkt zwischen der Fläche (58), die gekühlt werden soll, und dem Sockel (60) definiert ist, wobei die Turbinenmotorkomponente (50) ein Brennerhitzeschild ist.

2. Komponente nach Anspruch 1, wobei die Vielzahl von Sockeln (60, 160) und die Fläche (58), die gekühlt werden soll, als ein einziges Teil gebildet sind.

3. Komponente nach Anspruch 2, wobei die Vielzahl von Sockeln (60, 160) und die Fläche (58), die gekühlt werden soll, aus einem Hochtemperaturmetall gebildet sind.

4. Komponente nach Anspruch 1, 2 oder 3, wobei die Vielzahl von Sockeln (6, 160) und die Fläche (58), die gekühlt werden soll, durch eine direkte digitale Herstellungstechnologie aus einem Metalllegierungspulver geformt sind.

5. Komponente nach Anspruch 4, wobei die direkte digitale Herstellungstechnologie mindestens eine aus direktem Metalllasersintern, Elektronenstrahlsintern und ausgewähltem Lasersintern enthält.

6. Komponente nach Anspruch 5, wobei die direkte digitale Herstellungstechnologie ein direktes Metalllasersintern enthält.

7. Komponenten nach einem vorherigen Anspruch, wobei der Sockel (60, 160) symmetrisch um eine Sockelachse (A) senkrecht zur Fläche (58), die gekühlt werden soll, ist.

8. Komponente nach Anspruch 7, wobei Abschnitte des Sockels (60, 160) senkrecht zu der Sockelachse eines von Ellipsen und Parallelogrammen ist.

9. Komponenten nach einem vorherigen Anspruch, wobei jeder Sockel (60, 160) der Vielzahl von Sockeln, die von der Fläche (58) hervorstehen, die gekühlt werden soll, eine Sockelfläche (64) enthält, die so ausgerichtet ist, dass ein senkrechter Strahl zu der Sockelfläche (58) und der weg von der Sockelfläche (64) gerichtet ist, eine Linie schneidet, die durch einen Schnittpunkt zwischen der Fläche (58), die gekühlt werden soll, und dem Sockel (60, 160) definiert ist.

10. Gasturbinenmotor (10), umfassend:
einen Verdichterabschnitt (14), der eine Strömung von Kühlluft bereitstellt;
einen Turbinenabschnitt (18); und
einen Brennerabschnitt (16), der zwischen dem Verdichterabschnitt (14) und dem Turbinenabschnitt angeordnet ist (18), wobei der Brennerabschnitt (16) Folgendes enthält:
eine Luftkammer (29) in Fluidkommunikation mit dem Verdichterabschnitt (14), um die Strömung von Kühlluft zu erhalten;
eine Brennkammer (40) in Fluidkommunikation mit dem Turbinenabschnitt; und
mindestens ein Brennerhitzeschild (50) zwischen der Brennkammer (40) und der Luftkammer (29), wobei das Brennerhitzeschild (50) eine Komponente nach einem vorherigen Anspruch ist,
wobei die Fläche, die durch die Strömung von Kühlluft gekühlt werden soll, von der Brennkammer (40) weg zeigt.

11. Motor nach Anspruch 10, wobei das Brennerhitzeschild (50) als ein einziges Teil gebildet ist.

12. Motor nach Anspruch 11, wobei das Brennerhitzeschild (50) aus einem Hochtemperaturmetall gebildet ist.

13. Motor nach Anspruch 10, 11 oder 12, wobei das Brennerhitzeschild (50) durch direkte digitale Herstellungstechnologie aus Metalllegierungspulver gebildet ist, wobei die direkte digitale Herstellungstechnologie mindestens eines aus direktem Metalllasersintern, Elektronenstrahlsintern und ausgewähltem Lasersintern enthält.

14. Motor nach einem der Ansprüche 10 bis 13, wobei der Brennerabschnitt (16) ferner eine Vielzahl von Brennerhitzeschildern enthält (50), wobei jedes der Vielzahl von Brennerhitzeschildern (50) eine Innenfläche hat, die zu der Brennkammer (40) zeigt, und eine Außenfläche, die von der Brennkammer weg zeigt, und die Fläche (58), die durch die Strömung von Kühlluft gekühlt werden soll, die Außenfläche ist.

## Revendications

1. Composant de moteur à turbine (50) comprenant :
une surface (58) devant être refroidie par un flux d'air de refroidissement ; et
une pluralité de pieds (60, 160) faisant saillie à partir de la surface (58) devant être refroidie, **caractérisé en ce que** : au moins l'un des pieds (60, 160) comprend une surface de pied (60) qui présente une forme de sablier incurvé de sorte que partout dans une partie (64) de ladite surface (60) un quelconque rayon (R) normal sur ladite partie (64) et dirigé de manière à s'éloigner de la surface de pied croise une ligne définie par une intersection entre la surface (58) devant être refroidie et le pied (60), dans lequel le composant de moteur de turbine (50) est un bouclier thermique de chambre de combustion.

2. Composant selon la revendication 1, dans lequel la pluralité de pieds (60, 160) et la surface (58) devant être refroidie sont formées d'une seule pièce.

3. Composant selon la revendication 2, dans lequel la pluralité de pieds (60, 160) et la surface (58) devant être refroidie sont formées d'un métal à haute température.

4. Composant selon la revendication 1, 2 ou 3, dans lequel la pluralité de pieds (6, 160) et la surface (58) devant être refroidie sont formées par une technologie de fabrication numérique directe à partir de poudre d'alliage de métal.

5. Composant selon la revendication 4, dans lequel la technologie de fabrication numérique directe comprend un frittage par laser à métaux direct et/ou un frittage par faisceau d'électrons et/ou un frittage par laser sélectionné.

6. Composant selon la revendication 5, dans lequel la technologie de fabrication numérique directe comprend un frittage par laser à métaux direct.

7. Composant selon une quelconque revendication précédente, dans lequel le pied (60, 160) est symétrique autour d'un axe de pied (A) perpendiculaire à la surface (58) devant être refroidie.

8. Composant selon la revendication 7, dans lequel des sections du pied (60, 160) perpendiculaires à l'axe de pied sont des ellipses ou des parallélogrammes.

9. Composant selon une quelconque revendication précédente, dans lequel chaque pied (60, 160) de la pluralité de pieds faisant saillie à partir de la surface (58) devant être refroidie comprend une surface de pied (64) orientée de sorte qu'un rayon normal à la surface de pied (58) et dirigé de manière à s'éloigner de la surface de pied (64) croise une ligne définie par une intersection entre la surface (58) devant être refroidie et le pied (60, 160).

10. Moteur à turbine à gaz (10) comprenant :
une section de compresseur (14) fournissant un flux d'air de refroidissement ;
une section de turbine (18) ; et
une section de chambre de combustion (16) agencée entre la section de compresseur (14) et la section de turbine (18), la section de chambre de combustion (16) comprenant :
un plenum (29) en communication fluidique avec la section de compresseur (14) pour recevoir le flux d'air de refroidissement ;
une chambre de combustion (40) en communication fluidique avec la section de turbine ; et
au moins un bouclier thermique de chambre de combustion (50) entre la chambre de combustion (40) et le plenum (29), le bouclier thermique de chambre de combustion (50) étant un composant selon une quelconque revendication précédente, la surface devant être refroidie par le flux d'air de refroidissement étant dirigée de manière à s'éloigner de la chambre de combustion (40).

11. Moteur selon la revendication 10, dans lequel le bouclier thermique de chambre de combustion (50) est formé d'une seule pièce.

12. Moteur selon la revendication 11, dans lequel le bouclier thermique de chambre de combustion (50) est formé d'un métal à haute température.

13. Moteur selon la revendication 10, 11 ou 12, dans lequel le bouclier thermique de chambre de combustion (50) est formé par une technologie de fabrication numérique directe à partir de poudre d'alliage de métal, la technologie de fabrication numérique directe comprenant un frittage par laser à métaux direct et/ou un frittage par faisceaux d'électrons et/ou un frittage par laser sélectionné.

14. Moteur selon l'une quelconque des revendications 10 à 13, dans lequel la section de chambre de combustion (16) comprend en outre une pluralité de boucliers thermiques de chambre de combustion (50), chacun de la pluralité de boucliers thermiques de chambre de combustion (50) comprenant une surface interne faisant face à la chambre de combustion (40) et une surface externe dirigée de manière à s'éloigner de la chambre de combustion, et la surface (58) devant être refroidie par le flux d'air de refroidissement est la surface externe.
